# EUROPEAN PATENT APPLICATION

(11) **EP 4 811 246 A1**
(43) Date of publication of application: **23.09.2026**
(21) Application number: 26162292.2
(22) Date of filing: 04.03.2026
(51) Int. Cl.: G06Q 10/087, G06Q 30/02, G06Q 30/06, G06Q 30/0601, G06Q 50/12

(54) **ORDER SYSTEM, ORDER TERMINAL, AND ORDER METHOD**

(30) Priority: 19.03.2025 JP 2025045356
(71) Applicant: Glory Ltd., Hyogo 670-8567 (JP)
(72) Inventor: Sakamoto, Yuki, Hyogo, 670-8567 (JP); Kimura, Naoya, Hyogo, 670-8567 (JP); Kimura, Akane, Hyogo, 670-8567 (JP); Nakahori, Yuki, Hyogo, 670-8567 (JP); Fujimoto, Sho, Hyogo, 670-8567 (JP)
(74) Representative: SSM Sandmair

(57) **Abstract**

Provided is an order system that is for ordering a commodity through operation of a customer, and includes: a display configured to display a commodity to be sold; an operation unit configured to accept an input operation by a user regarding a commodity order; an acquisition unit configured to acquire a stock quantity of the commodity; and an acceptance unit configured to allow, after announcing replenishment information regarding replenishment of the commodity to the user, acceptance of an order for the commodity in a sold-out state or the commodity for which the stock quantity acquired by the acquisition unit is less than an intended order quantity thereof.

## Description

### BACKGROUND

The present invention relates to an order system, an order terminal, a management apparatus, an order acceptance method, and an order management method.

Japanese Laid-Open Patent Publication No. H3-231362 describes a cafeteria management apparatus that is provided with: storage means for storing a preset quantity of each dish that can be provided; calculation means that calculates the quantity of the dish having been provided, based on sales proceeds information; and control means that causes, when the quantity of the provided dish has reached the preset quantity of the dish, information indicating that the dish has been sold out to be shown on a ticket machine and a card reader.

In general, in restaurants, when the stock of a commodity is less than the quantity of the commodity that a customer wishes order, the order is restricted and a new order cannot be made. When replenishment of the stock of the commodity is possible through cooking, it is desirable to accept a new order.

An object of the present invention is to provide an order system and the like that allow a customer to order a commodity when replenishment of the stock of the commodity is possible.

### SUMMARY

The present invention completed for attaining the above object is an order system. The order system includes: a display configured to display a commodity to be sold; an operation unit that accepts an input operation by a user regarding a commodity order; an acquisition unit configured to acquire a stock quantity of the commodity; and an acceptance unit configured to allow, after announcing replenishment information regarding replenishment of the commodity to the user, acceptance of an order for the commodity in a sold-out state or the commodity for which the stock quantity acquired by the acquisition unit is less than an intended order quantity thereof.

Here, the replenishment information may include at least one of whether to perform replenishment of the commodity, a time period required for replenishment of the commodity, a scheduled replenishment quantity of the commodity, or information indicating that a waiting time period will occur before reception of the commodity.

The replenishment information may include a scheduled replenishment quantity of the commodity, and the acceptance unit may announce, to the user, a number obtained by subtracting the intended order quantity of the commodity from a total of the stock quantity of the commodity and the scheduled replenishment quantity of the commodity.

The replenishment information may include a scheduled replenishment quantity of the commodity, and responding to the intended order quantity of the commodity exceeds a total of the stock quantity of the commodity and the scheduled replenishment quantity of the commodity, the acceptance unit may announce, to the user, that a time period required for replenishment of the commodity will increase.

The order system may include a switching unit configured to switch whether or not to announce the replenishment information to the user.

The order system may include a kitchen terminal to which a staff member of a kitchen inputs the replenishment information, and the acquisition unit may acquire the replenishment information inputted to the kitchen terminal.

The kitchen terminal may accept a change instruction for changing the replenishment information, and the acquisition unit may acquire the change instruction from the kitchen terminal.

The replenishment information may include a scheduled replenishment quantity of the commodity, the order system may include a kitchen terminal operated by a staff member of a kitchen, and an inquiry unit configured to make an inquiry to the kitchen terminal as to whether or not replenishment of the commodity is possible, based on the intended order quantity of the commodity exceeding a total of the stock quantity of the commodity and the scheduled replenishment quantity of the commodity, and the acceptance unit may accept an order for the commodity, based on a result of the inquiry made by the inquiry unit.

The order system may include a kitchen terminal operated by a staff member of a kitchen, and based on acceptance of an order for the commodity in a sold-out state or the commodity for which the stock quantity is less than the intended order quantity, the acceptance unit may transmit, to the kitchen terminal, a replenishment instruction for the commodity for which the order has been accepted.

In another viewpoint, the present invention is an order terminal. The order terminal includes: a display configured to display a commodity to be sold; an operation unit that accepts an input operation by a user regarding a commodity order; an acquisition unit configured to acquire a stock quantity of the commodity; and an acceptance unit configured to allow, after announcing replenishment information regarding replenishment of the commodity to the customer, acceptance of an order for the commodity in a sold-out state or the commodity for which the stock quantity having been acquired is less than an intended order quantity thereof.

In another viewpoint, the present invention is an order method. The order method includes: acquiring order information of a commodity through an input operation of a user; acquiring a stock quantity of the commodity to be sold; and accepting, after announcing replenishment information regarding replenishment of the commodity to the user, an order for the commodity in a sold-out state or the commodity for which the stock quantity having been acquired is less than an intended order quantity thereof.

The replenishment information may include at least one of whether to perform replenishment of the commodity, a time period required for replenishment of the commodity, a scheduled replenishment quantity of the commodity, or information indicating that a waiting time period will occur before reception of the commodity.

The replenishment information may include a scheduled replenishment quantity of the commodity, and announcing, to the user, a number obtained by subtracting the intended order quantity of the commodity from a total of the stock quantity of the commodity and the scheduled replenishment quantity of the commodity.

The replenishment information may include a scheduled replenishment quantity of the commodity, and responding to the intended order quantity of the commodity exceeds a total of the stock quantity of the commodity and the scheduled replenishment quantity of the commodity, announcing, to the user, that a time period required for replenishment of the commodity will increase.

The order method may include switching whether or not to announce the replenishment information to the user.

According to the present invention, it is possible to provide an order system and the like that allow a customer to order a commodity when replenishment of the stock of the commodity is possible.

### BRIEF DESCRIPTION OF THE DRAWINGS

FIG. 1 is a diagram showing an example of a schematic configuration of an order system according to the present embodiment;
FIG. 2 is a diagram showing an example of schematic configurations of an order terminal, a POS register, a kitchen terminal, and a management server;
FIG. 3 is a diagram showing an example of a schematic configuration of the order terminal;
FIG. 4 is a diagram showing an example of an image displayed on an operation/display unit at the time of commodity selection;
FIGS. 5A to 5C are each a diagram showing an example of a commodity selection button displayed in a commodity selection image at the time of commodity selection, FIG. 5A shows an example in which replenishment information is not displayed, FIG. 5B is an example in which a waiting time period is displayed as the replenishment information, and FIG. 5C shows an example in which there is neither stock nor a replenishment schedule;
FIGS. 6A to 6D are each a diagram showing an example of a purchase commodity image displayed in a cart-inside confirmation image at the time of commodity selection, FIG. 6A shows an example in which the replenishment information is not displayed, FIG. 6B shows an example in which a waiting time period is displayed as the replenishment information, FIG. 6C shows an example in which there is neither stock nor a replenishment schedule, and FIG. 6D shows an example in which a waiting time period and a remaining quantity are displayed as the replenishment information;
FIG. 7 is a diagram showing an example of an image displayed on the operation/display unit at the time of confirmation of order details;
FIGS. 8A to 8D are each a diagram showing an example of an order confirmation image displayed in the operation/display unit at the time of confirmation of order details, FIG. 8A shows an example in which the replenishment information is not displayed, FIG. 8B shows an example in which a waiting time period is displayed as the replenishment information, FIG. 8C shows an example in which there is neither stock nor a replenishment schedule, and FIG. 8D shows an example in which a waiting time period and a remaining quantity are displayed as the replenishment information;
FIGS. 9A and 9B are each a diagram showing an example of a process flow when a commodity selection screen is displayed on the operation/display unit, FIG. 9A shows a process performed in the management server, and FIG. 9B shows a process performed in the order terminal;
FIG. 10 is a diagram showing an example of a process flow when a commodity selection screen is displayed on the operation/display unit at the time of shifting of the screen;
FIGS. 11A to 11C are each a diagram showing an example of an image displayed on the operation/display unit in an order system, FIG. 11A shows an example of a purchase commodity image displayed in the cart-inside confirmation image, FIG. 11B shows an example of an announcement image for the customer, and FIG. 11C shows an example of an order confirmation image displayed after announcement has been made to the customer;
FIG. 12 is a diagram showing an example of an image displayed on the operation/display unit at the time of confirmation of order details;
FIG. 13 is a diagram showing an example of movement of an animation displayed on the operation/display unit at the time of commodity selection;
FIG. 14 is a diagram showing an example of a process flow at the time of order acceptance in an order system; and
FIGS. 15A and 15B are each a diagram showing an example of a display process of an image of a commodity executed in an order system, FIG. 15A shows an example in which an optimum image is selected from among images prepared in advance, and FIG. 15B shows an example in which a new image is generated.

### DESCRIPTION OF THE PREFERRED EMBODIMENTS

Hereinafter, an embodiment will be described in detail with reference to the accompanying drawings.

### <Embodiment>

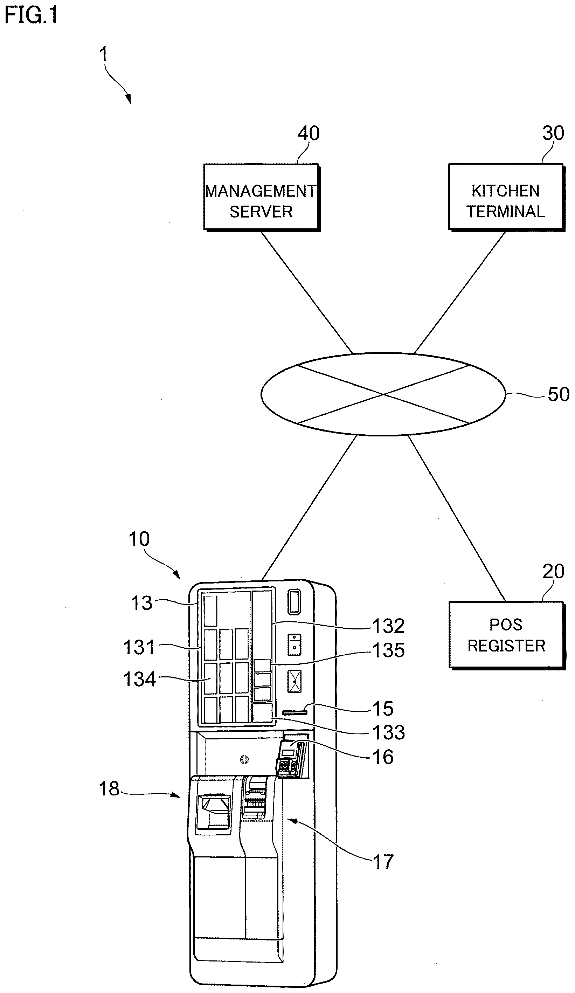

FIG. 1 is a diagram showing an example of a schematic configuration of an order system 1 according to the present embodiment.

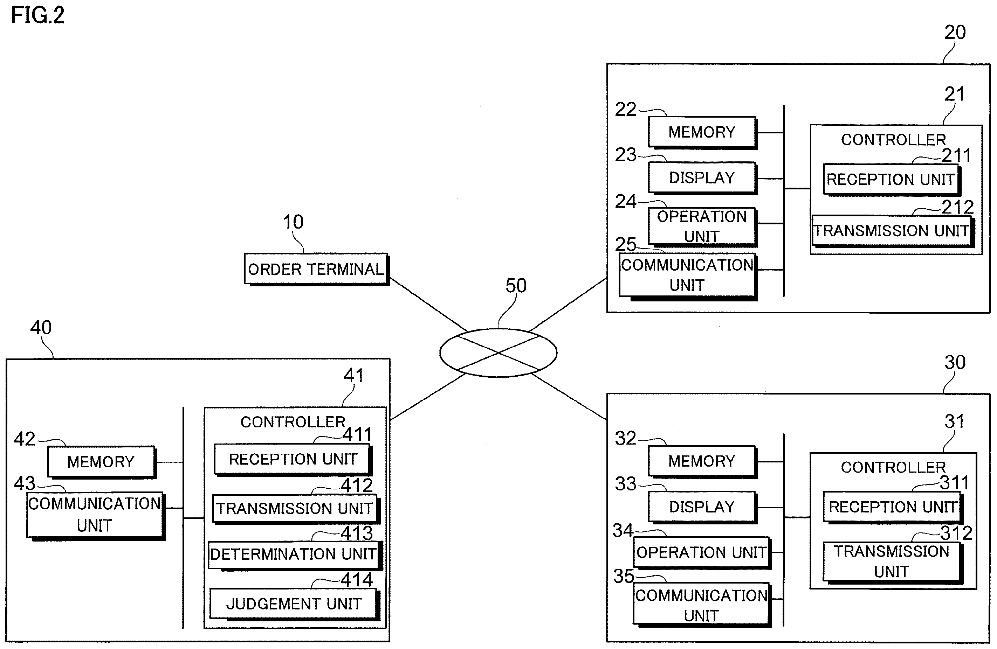

FIG. 2 is a diagram showing an example of schematic configurations of an order terminal 10, a POS register 20, a kitchen terminal 30, and a management server 40.

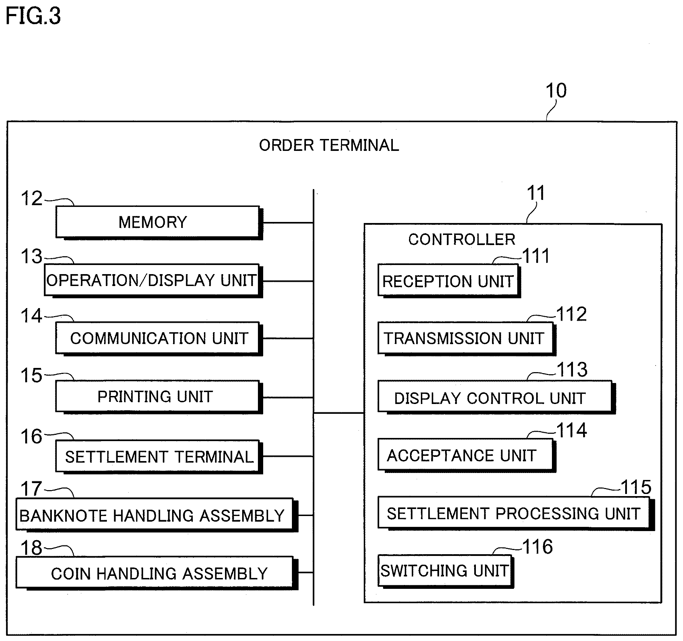

FIG. 3 is a diagram showing an example of a schematic configuration of the order terminal 10.

The order system 1 includes the order terminal 10 that accepts an order for food and beverage commodities from a user, for example a customer, and the POS (Point Of Sales) register 20. The customer may order a commodity using the order terminal 10, or may order a commodity through the POS register 20. A plurality of order terminals 10 may be installed and a plurality of POS registers 20 may be installed. Alternatively, only the order terminal 10 may be installed without the POS register 20. The order terminal 10 is an example of an acceptance unit.

The order system 1 includes the kitchen terminal 30 installed in a kitchen and operated by a staff member of the kitchen, and the management server 40 that manages order information accepted by the order terminal 10 and the POS register 20. The order terminal 10, the POS register 20, the kitchen terminal 30, and the management server 40 are connected to each other via a network 50. The management server 40 may be installed in a store where the order terminal 10 is installed, or may be installed outside the store.

The network 50 is not particularly limited as long as the network 50 is a communication network used for data communication between apparatuses, and can be, for example, the Internet, WAN (Wide Area Network), or LAN (Local Area Network). Communication lines used for data communication may be wired or wireless, and these may be used in combination. The wireless LAN can be, for example, WiFi (registered trademark). In the network 50, communication networks used for data communication between apparatuses may be different.

### (Order terminal 10)

The order terminal 10 includes a controller 11 that controls the entirety of the apparatus, and a memory 12 that is used for storage of data and the like. The order terminal 10 includes an operation/display unit 13 that can display an image or a screen for accepting an order and can accept an input operation, and a communication unit 14 such as a communication interface used in communication with the kitchen terminal 30 and the management server 40. The order terminal 10 includes a printing unit 15 that prints a receipt and the like, and a settlement terminal 16 that performs settlement processing using a credit card or an IC card. The order terminal 10 includes a banknote handling assembly 17 that performs a banknote depositing/withdrawal process, and a coin handling assembly 18 that performs a coin depositing/withdrawal process.

The operation/display unit 13 is an example of a display.

The memory 12 can be, for example, a storage device such as a semiconductor memory. The memory 12 stores therein information on commodities that can be provided, and the like.

The operation/display unit 13 can be, for example, a touch panel obtained by combining a display device that displays still images, moving images, and the like, and a position input device.

The settlement terminal 16 performs settlement processing using a credit card inserted by the customer and settlement processing using an IC card held thereabove by the customer.

The controller 11 is implemented by a CPU (Central Processing Unit), a ROM (Read Only Memory), and a RAM (Random Access Memory). The ROM stores therein a basic program (operation system) executed by the CPU, various settings, and the like. The CPU executes application programs read out from the ROM and the memory 12, while using the RAM as a work area.

The controller 11 includes a reception unit 111 that receives information from the kitchen terminal 30 and the management server 40, and a transmission unit 112 that transmits information to the kitchen terminal 30 and the management server 40. The controller 11 includes a display control unit 113 that controls the operation/display unit 13, and an acceptance unit 114 that accepts an order from the customer. The controller 11 includes a settlement processing unit 115 that performs settlement processing, and a switching unit 116 that switches whether or not the order terminal 10 announces replenishment information to the customer.

The reception unit 111 receives, as information on a commodity that can be provided, the quantity of the commodity that can be provided, from the management server 40, for example, and stores the received information into the memory 12.

The transmission unit 112 transmits, to the management server 40, order information according to the order for which settlement has been performed at the order terminal 10.

The display control unit 113 causes the operation/display unit 13 to display a commodity selection image 131 regarding commodities that can be provided at the store, a cart-inside confirmation image 132, and the like. FIG. 1 shows, as an example of the commodity selection image 131, an example in which the display control unit 113 has caused the operation/display unit 13 to display commodity selection buttons 134 each for displaying an image of food or a beverage that the restaurant can provide to the customer.

The display control unit 113 causes the quantity of the commodity that can be provided, to be displayed in association with the commodity selection button 134. The display control unit 113 may cause replenishment information of the commodity to be displayed in association with the commodity selection button 134. The replenishment information is information on replenishment of the commodity, and includes whether or not to perform replenishment of the commodity, the time period required for replenishment of the commodity, and a scheduled replenishment quantity of the commodity. Information indicating that a waiting time period will occur before reception of the commodity suggests occurrence of a waiting time period due to necessity of replenishment of the commodity, and thus, is also included in the replenishment information.

After order details have been determined by an order button having been pressed, for example, the display control unit 113 causes the operation/display unit 13 to display a screen for confirming the order details.

When the customer has touched a commodity selection button 134 displayed on the operation/display unit 13, the acceptance unit 114 accepts an order for the commodity according to the commodity selection button 134. For example, when the customer has pressed the commodity selection button 134 shown as an example in FIG. 1, the acceptance unit 114 accepts an order for the food or beverage corresponding to the image displayed at the commodity selection button 134. The acceptance unit 114 accepts the order for the commodity displayed in association with the commodity selection button 134, up to the quantity of the commodity that can be provided. The quantity of the commodity that can be provided includes the quantity of the commodity that can be provided without a waiting time period, and the quantity of the commodity that can be provided after lapse of a waiting time period until replenishment is completed.

The settlement processing unit 115 performs settlement processing using the banknote handling assembly 17 and the coin handling assembly 18 when cash has been selected as settlement means.

The switching unit 116 switches whether or not to announce the replenishment information to the customer. The switching unit 116 switches whether or not to display the replenishment information of the commodity associated with the commodity selection button 134. The announcement of the replenishment information may be performed through sound or the like, for example, and in this case, the switching unit 116 switches whether or not to announce the replenishment information through sound.

Whether or not to perform the announcement may be switched for all the commodities, or may be performed for each commodity.

### (POS register 20)

The POS register 20 includes: a controller 21 that controls the entirety of the apparatus; a memory 22 that is used for storage of data and the like; a display 23 that is used for display of an operation acceptance screen and images; an operation unit 24 that accepts an input operation of a user; and a communication unit 25 that is used in communication with the order terminal 10, the kitchen terminal 30, and the management server 40.

The memory 22 may be a semiconductor memory, an HDD, or the like. The memory 22 stores therein order information on the commodity ordered through the POS register 20 by the customer, and the like.

The display 23 is a display device that displays still images, moving images, and the like. The display 23 may be a liquid crystal display or an organic EL display.

The operation unit 24 is an input device that accepts operations of the user. The operation unit 24 may be a button, a switch, or a touch panel.

The communication unit 25 may be a communication interface.

The controller 21 is implemented by a CPU, a ROM, and a RAM.

The controller 21 includes a reception unit 211 that receives information from the kitchen terminal 30 and the management server 40, and a transmission unit 212 that transmits information to the kitchen terminal 30 and the management server 40. The reception unit 211 receives, for example, information on a replenishment schedule of a commodity from the management server 40. The transmission unit 212 transmits, to the management server 40, order information of a commodity ordered through the POS register 20 by the customer.

### (Kitchen terminal 30)

The kitchen terminal 30 includes: a controller 31 that controls the entirety of the apparatus; a memory 32 that is used for storage of data and the like; a display 33 that is used for display of an operation acceptance screen and images; an operation unit 34 that accepts an input operation of a staff member; and a communication unit 35 that is used in communication with the order terminal 10, the POS register 20, and the management server 40. The kitchen terminal 30 may be a display device that displays still images, moving images, and the like and that is installed, for example, in the kitchen. The kitchen terminal 30 may be a touch panel obtained by combining a display device and a position input device. The kitchen terminal 30 may be a handheld terminal owned by a staff member, or a staff terminal such as a store terminal installed at a pass station.

The memory 32 may be a semiconductor memory, an HDD, or the like. The memory 32 stores therein a replenishment schedule of the commodity inputted on the order terminal 10 by a staff member in the kitchen, and the like.

The display 33 is a display device that displays still images, moving images, and the like. The display 33 may be a liquid crystal display or an organic EL display.

The operation unit 34 is an input device that accepts operations of a staff member. The operation unit 34 may be a button, a switch, or a touch panel. The staff member inputs replenishment information such as a replenishment schedule of a commodity through the operation unit 34. The staff member touches a replenishment button of the operation unit 34, for example, to select a commodity as a replenishment target. An input screen for a replenishment quantity and cooking start time of the commodity to be displayed on the display 33 is displayed, and the staff member inputs these pieces of information. The inputted information is transmitted to the management server 40. The management server 40 calculates a cooking completion time, based on the cooking time period set for the commodity stored in a memory 42, and the cooking start time and the replenishment quantity received from the kitchen terminal 30. Here, the management server 40 also calculates a waiting time period required for the customer to receive the commodity. The management server 40 acquires an intended order quantity of the customer from the order terminal 10, and calculates a necessary replenishment quantity, based on the difference between the intended order quantity and a stock quantity. Then, based on the cooking start time received from the kitchen terminal 30, a waiting time period is calculated.

When the commodity is in a sold-out state or the quantity of the stock has become equal to or less than a certain number, the kitchen terminal 30 may be notified of this fact from the management server 40. The staff member designates the notified commodity, and inputs replenishment information.

Alternatively, instead of the management server 40 calculating the cooking completion time and the waiting time period, the staff member may operate the operation unit 34 to input a cooking completion time and a waiting time period to the kitchen terminal 30, and the management server 40 may receive the inputted information from the kitchen terminal 30.

In addition, the operation unit 34 accepts a change instruction for changing the replenishment information. For example, when a change has been made in the replenishment schedule, the staff member inputs a change instruction as to the replenishment schedule of the commodity and the like through the operation unit 34.

The communication unit 35 may be a communication interface.

The controller 31 is implemented by a CPU, a ROM, and a RAM.

The controller 31 includes: a reception unit 311 that receives information from the order terminal 10, the POS register 20, and the management server 40; and a transmission unit 312 that transmits information to the order terminal 10, the POS register 20, and the management server 40. The reception unit 311 receives an inquiry regarding replenishment of a commodity, for example, from the management server 40. The transmission unit 312 transmits, to the management server 40, replenishment information of a commodity and a change instruction of the replenishment information inputted by the staff member of the kitchen.

### (Management server 40)

The management server 40 includes: a controller 41 that controls the entirety of the apparatus; the memory 42 that is used for storage of data and the like; and a communication unit 43 that is used in communication with the order terminal 10, the POS register 20, and the kitchen terminal 30. The management server 40 may be a so-called local server, or may be a virtual server (e.g., cloud server) constructed using resources on a network.

The memory 42 may be a semiconductor memory, an HDD (Hard Disk Drive), or the like. The memory 42 stores therein information on commodities that can be provided at the store; commodities ordered at the order terminal 10 and the POS register 20 and the ordered quantities thereof; replenishment information of commodities inputted on the kitchen terminal 30; and the like.

The communication unit 43 may be a communication interface.

The controller 41 is implemented by a CPU, a ROM, and a RAM.

The controller 41 includes: a reception unit 411 that receives information from the order terminal 10, the POS register 20, and the kitchen terminal 30; and a transmission unit 412 that transmits information to the order terminal 10 and the kitchen terminal 30. The controller 41 includes: a determination unit 413 that determines a quantity of each commodity that can be provided; and a judgment unit 414 that compares the intended order quantity with the quantity of the commodity that can be provided, and judges whether or not acceptance of the order is possible. The intended order quantity is the order quantity of the commodity inputted to the order terminal 10 by the user.

The reception unit 411 receives order information accepted by the order terminal 10 and the POS register 20, and stores these pieces of information into the memory 42. In addition, the reception unit 411 receives replenishment information of a commodity from the kitchen terminal 30 and a change instruction of the replenishment information, and stores these pieces of information into the memory 42.

The determination unit 413 determines a quantity of a commodity that can be provided, based on stock information and replenishment information. The stock information is information on the stock quantity of the commodity at the time of order acceptance. The stock quantity of the commodity is the quantity of the commodity in a completed state, and the quantity of the commodity that can be provided without need of replenishment through cooking or the like. The determination unit 413 calculates the stock quantity of the commodity at the time of order acceptance, by using the order information and the replenishment information, based on, for example, the stock quantity at the time of opening of the store. The determination unit 413 can be considered as an example of an acquisition unit that acquires the stock information.

The judgment unit 414 judges whether or not acceptance of an order for a commodity is possible. For example, when an order for a commodity has been completed at another order terminal 10 or POS register 20, the quantity of the commodity that can be provided being displayed on the operation/display unit 13 may exceed the quantity of the commodity that can be provided at that timepoint. The judgment unit 414 compares, at the time of screen shift, for example, the intended order quantity with the quantity of the commodity that can be provided, and judges whether or not acceptance of the order is possible. Every time an order for a commodity is completed at another order terminal 10 or POS register 20, the judgment unit may judge whether or not acceptance of the order is possible.

With respect to a commodity in a sold-out state or a commodity for which the stock quantity is less than the intended order quantity, the judgment unit 414 judges that acceptance of the order is possible, after the replenishment information is announced to the customer. Also with respect to a commodity for which replenishment is not scheduled, the judgment unit 414 may judge that acceptance of the order is possible, after information indicating that a waiting time period will occur before reception of the commodity is announced to the customer. In this case, an instruction regarding replenishment of the commodity is transmitted, for example, from the transmission unit 412 to the kitchen terminal 30.

The transmission unit 412 transmits, to the order terminal 10, the quantity, of the commodity that can be provided, having been determined by the determination unit 413. In addition, the transmission unit 412 transmits the judgment result by the judgment unit 414 to the order terminal 10. The transmission unit 412 may transmit, to the kitchen terminal 30, an inquiry as to whether or not replenishment is possible. The transmission unit 412 is an example of an inquiry unit.

### (Display on operation/display unit 13)

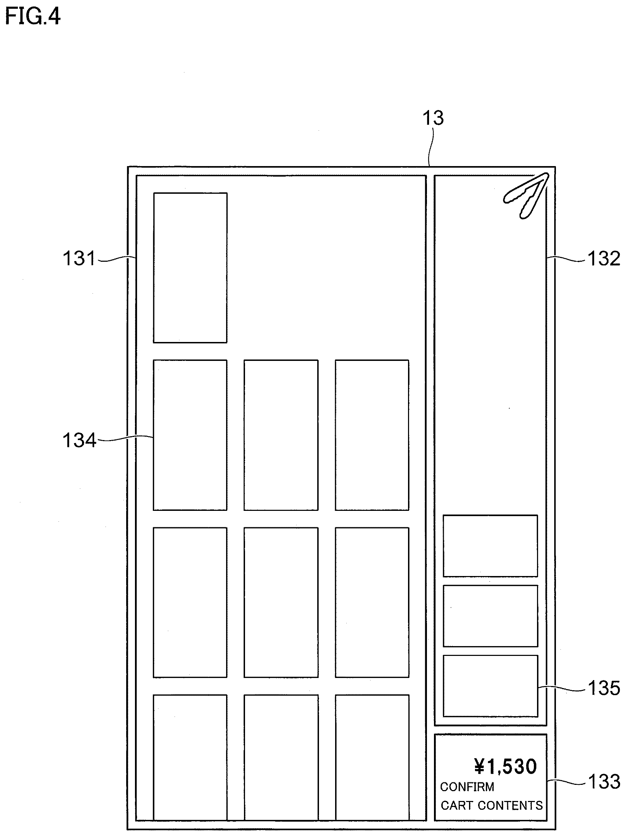

FIG. 4 is a diagram showing an example of an image displayed on the operation/display unit 13 at the time of commodity selection.

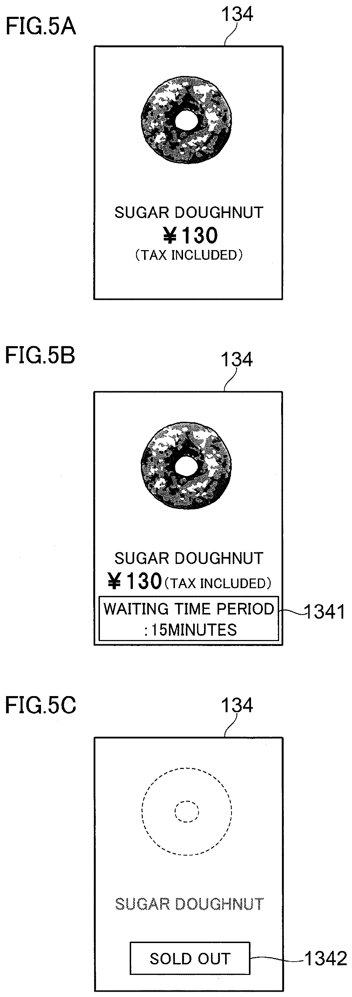

FIGS. 5A to 5C are each a diagram showing an example of the commodity selection button 134 displayed in the commodity selection image 131 at the time of commodity selection. FIG. 5A shows an example in which the replenishment information is not displayed, FIG. 5B shows an example in which a waiting time period is displayed as the replenishment information, and FIG. 5C shows an example in which there is neither stock nor a replenishment schedule.

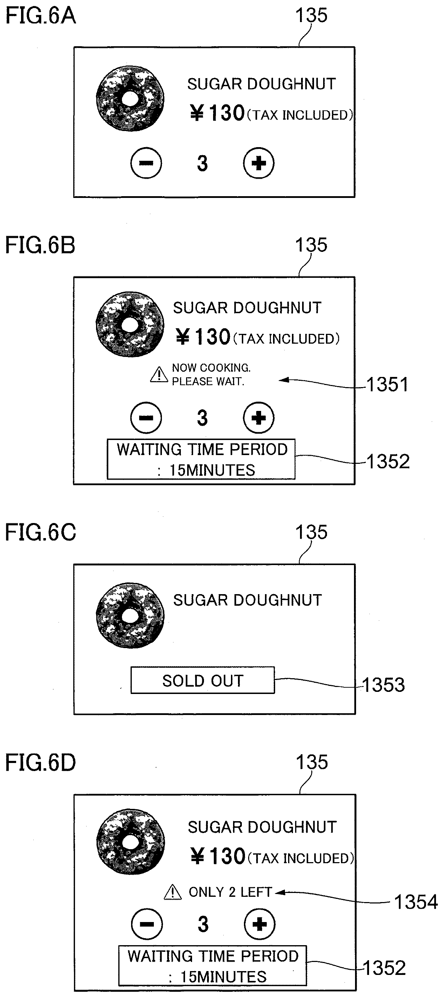

FIGS. 6A to 6D are each a diagram showing an example of a purchase commodity image 135 displayed in the cart-inside confirmation image 132 at the time of commodity selection. FIG. 6A shows an example in which the replenishment information is not displayed, and FIG. 6B shows an example in which a waiting time period is displayed as the replenishment information. FIG. 6C shows an example in which there is neither stock nor a replenishment schedule, and FIG. 6D shows an example in which a waiting time period and a remaining quantity are displayed as the replenishment information.

At the time of commodity selection, the commodity selection image 131, the cart-inside confirmation image 132, and order details confirmation button 133 are displayed on the operation/display unit 13.

In the commodity selection image 131, the commodity selection buttons 134 each allowing the customer to select a commodity are displayed. The customer selects a commodity to be purchased from the commodity selection buttons 134 displayed in the commodity selection image 131, and presses the corresponding commodity selection button 134. As shown in FIG. 5A, an image of the commodity, the commodity name, and the price of the commodity are displayed at the commodity selection button 134. The commodity selection button 134 is an example of an acceptance unit.

At the commodity selection button 134, the waiting time period may be additionally displayed as the replenishment information. In the example shown in FIG. 5B, the fact that the waiting time period is 15 minutes is indicated by text 1341. As shown in FIG. 5C, when there is neither stock nor a replenishment schedule, the fact that the commodity is sold out is indicated by text 1342. In the example shown in FIG. 5C, an image of the commodity and the commodity name are faintly displayed together with the text 1342. A configuration in which, in the case of being sold out, the commodity is not displayed, may be adopted.

The commodity selected by the customer is added to the cart-inside confirmation image 132, and the purchase commodity image 135 is displayed. As shown in FIG. 6A, in the purchase commodity image 135, an image of the commodity, the commodity name, the price of the commodity, and the purchase quantity are displayed. The customer can change the purchase quantity by pressing a "+" button or a "-" button in the purchase commodity image 135.

In the purchase commodity image 135, the waiting time period may be additionally displayed as the replenishment information. In the example shown in FIG. 6B, the fact that the commodity is being cooked is indicated by text 1351. In addition, the fact that the waiting time period is 15 minutes is indicated by text 1352.

While the customer is performing an operation of selecting a commodity, the stock of the commodity may run out due to an order from another order terminal 10 or POS register 20. In such a case, for example, as shown in FIG. 6C, the fact that the commodity is sold out is indicated by text 1353.

In the purchase commodity image 135, other than the waiting time period, the remaining quantity of the commodity may be displayed as the replenishment information. In the example shown in FIG. 6D, the fact that the remaining quantity of the commodity is two is indicated by text 1354. The remaining quantity displayed as the replenishment information may be the remaining quantity of the stock or may be the number obtained by subtracting the intended order quantity of the commodity from the total of the remaining quantity of the stock and the scheduled replenishment quantity.

When replenishment of the commodity has been completed, the display of the replenishment information may be deleted and changed to the display shown in FIG. 6A. Stock information to which the quantity of the commodity made through the replenishment has been added, may be displayed.

On the commodity selection screen shown in FIG. 4, the customer selects a commodity to be purchased, from the commodity selection image 131, and determines the quantity of the commodity to be purchased, on the purchase commodity image 135 in the cart-inside confirmation image 132. Then, the customer presses the order details confirmation button 133 to shift the screen of the operation/display unit 13. When the order details confirmation button 133 has been pressed, the display control unit 113 causes the operation/display unit 13 to display a screen for confirming the order details.

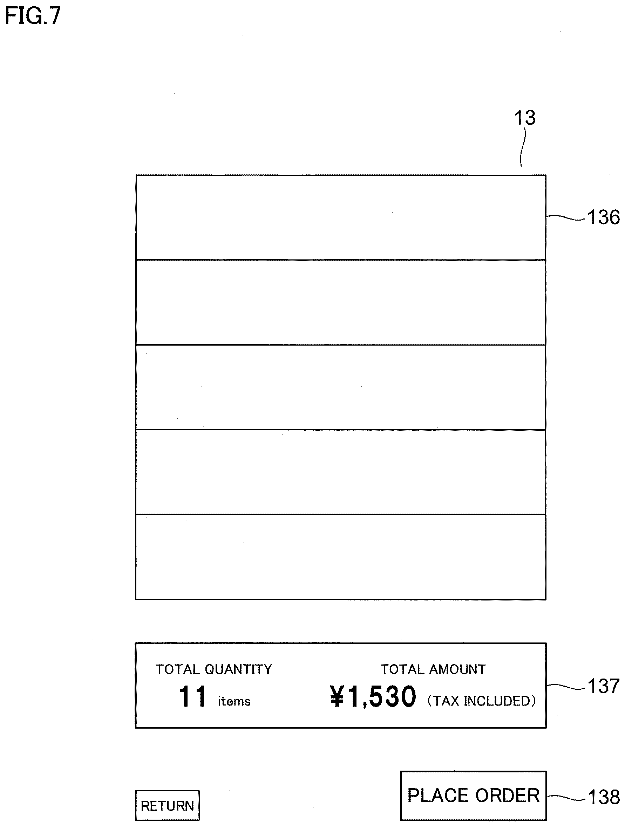

FIG. 7 is a diagram showing an example of an image displayed on the operation/display unit 13 at the time of confirmation of the order details.

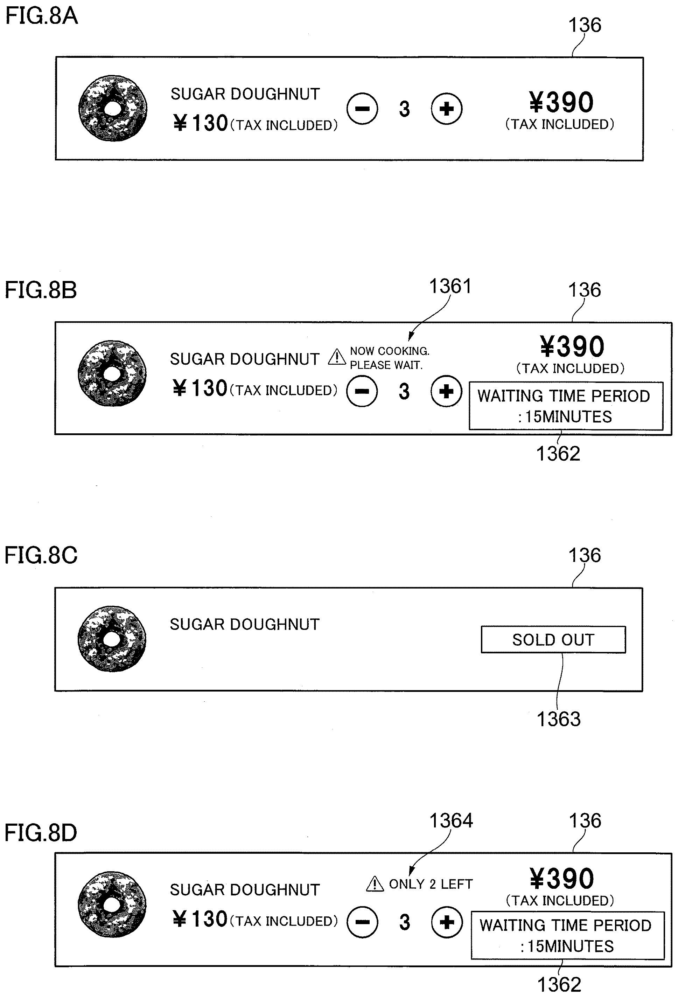

FIGS. 8A to 8D are each a diagram showing an example of an order confirmation image 136 displayed in the operation/display unit 13 at the time of confirmation of the order details. FIG. 8A shows an example in which the replenishment information is not displayed, and FIG. 8B shows an example in which a waiting time period is displayed as the replenishment information. FIG. 8C shows an example in which there is neither stock nor a replenishment schedule, and FIG. 8D shows an example in which a waiting time period and a remaining quantity are displayed as the replenishment information.

At the time of confirmation of the order details, the order confirmation image 136, a purchase amount image 137, and a purchase details finalization button 138 are displayed on the operation/display unit 13.

As shown in FIG. 8A, an image of the commodity, the commodity name, the price of the commodity, the purchase quantity, and the total amount are displayed in the order confirmation image 136. The customer can change the purchase quantity by pressing a "+" button or a "-" button in the order confirmation image 136.

In the order confirmation image 136, the waiting time period may be additionally displayed as the replenishment information. In the example shown in FIG. 8B, the fact that the commodity is being cooked is indicated by text 1361. The fact that the waiting time period is 15 minutes is indicated by text 1362.

Before the customer presses the order details confirmation button 133 after selecting a commodity, the stock of the commodity may run out due to an order from another order terminal 10 or POS register 20. In such a case, for example, as shown in FIG. 8C, the fact that the commodity is sold out is indicated by text 1363.

In the order confirmation image 136, other than the waiting time period, the remaining quantity of the commodity may be displayed as the replenishment information. In the example shown in FIG. 8D, the fact that the remaining quantity of the commodity is two is indicated by text 1364. The remaining quantity displayed as the replenishment information may be the remaining quantity of the stock or may be the number obtained by subtracting the intended order quantity of the commodity from the total of the remaining quantity of the stock and the scheduled replenishment quantity.

In the purchase amount image 137, the total quantity of commodities selected by the customer and the total amount are displayed.

The customer presses the purchase details finalization button 138 to shift the screen of the operation/display unit 13. When the purchase details finalization button 138 has been pressed, the display control unit 113 causes the operation/display unit 13 to display a screen for selecting a payment method. The customer selects a payment method and completes the payment, whereby the order for the commodities is completed. When a commodity for which a waiting time period is required for the customer to receive the commodity is included in the order, the scheduled pickup time of the commodity is printed, for example, on a receipt or the like. A two-dimensional code such as a QR code (registered trademark) may be printed on the receipt, and the customer may confirm the scheduled pickup time by reading the two-dimensional code.

### (Screen display on operation/display unit 13)

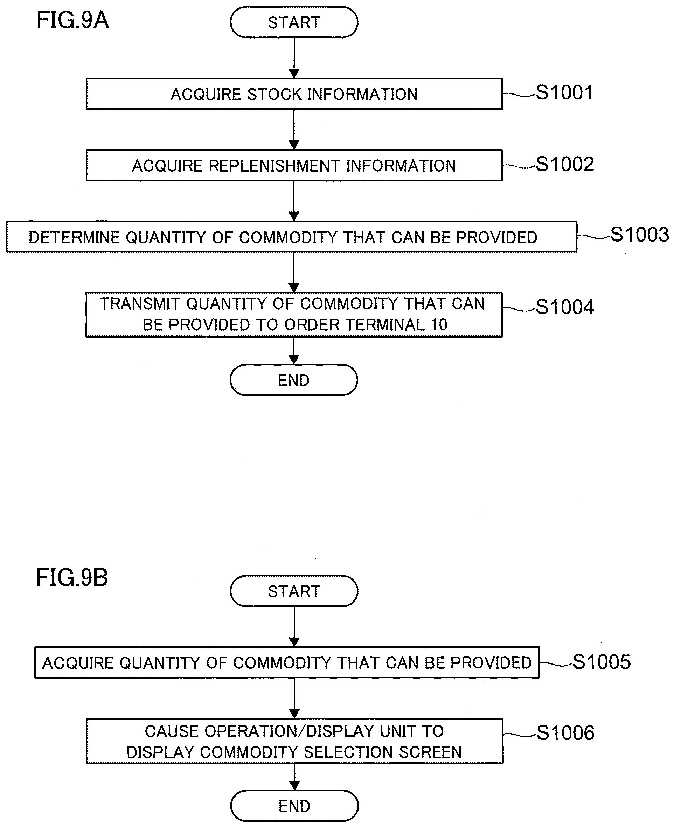

FIGS. 9A and 9B are each a diagram showing an example of a process flow when a commodity selection screen is displayed on the operation/display unit 13. FIG. 9A shows a process performed in the management server 40, and FIG. 9B shows a process performed in the order terminal 10.

First, in the management server 40, the reception unit 411 acquires stock information (step 1001). The reception unit 411 acquires information on a replenishment schedule from the kitchen terminal 30 at the time of opening of the store or at the time of initial production of each commodity, and stores the acquired information as the initial stock quantity, at the replenishment completion time of the commodity, into the memory 42. When an order for a commodity has been made, the reception unit 411 acquires order information from the order terminal 10 or the POS register 20. The determination unit 413 calculates the stock quantity by using the order information and replenishment information.

Next, the reception unit 411 acquires the replenishment information (step 1002). The reception unit 411 acquires information on a replenishment schedule from the kitchen terminal 30.

Next, the determination unit 413 determines the quantity of the commodity that can be provided (step 1003). The determination unit 413 determines the quantity of the commodity that can be provided, based on the stock information and the replenishment information. The quantity of the commodity that can be provided is calculated based on the total of the stock quantity and the scheduled replenishment quantity. If the ordered quantity is less than the stock quantity, the commodity can be provided without a waiting time period. If the intended order quantity is more than the stock quantity, the time period until the replenishment is completed is the waiting time period. When the replenishment is performed stepwise separated in two times or more, the waiting time period is determined through comparison between: the total of the stock quantity and the completed replenishment quantity at the replenishment completion timepoint in each time; and the intended order quantity.

Next, the transmission unit 412 transmits, to the order terminal 10, the quantity of the commodity that can be provided (step 1004). The transmission unit 412 transmits the quantity, of the commodity that can be provided, having been determined by the determination unit 413. The transmission unit 412 also transmits a quantity of the commodity, in the quantity of the commodity that can be provided, for which a waiting time period is required, and the waiting time period thereof, to the order terminal 10.

Next, the reception unit 111 of the order terminal 10 acquires the quantity of the commodity that can be provided (step 1005). The reception unit 111 stores the acquired information into the memory 12.

Then, the display control unit 113 causes the operation/display unit 13 to display a commodity selection screen (step 1006). The display control unit 113 causes the waiting time period to be displayed at the commodity selection button 134 (see FIG. 5) as necessary. The display control unit 113 causes the waiting time period or the remaining quantity of the commodity to be displayed in the purchase commodity image 135 (see FIG. 6) as necessary.

The waiting time period or the remaining quantity of the commodity need not necessarily be displayed in the image of the commodity selection button 134 or the purchase commodity image 135. As long as the correspondence with the commodity can be understood, the waiting time period or the remaining quantity of the commodity may be displayed outside the image.

### (Screen shift at operation/display unit 13)

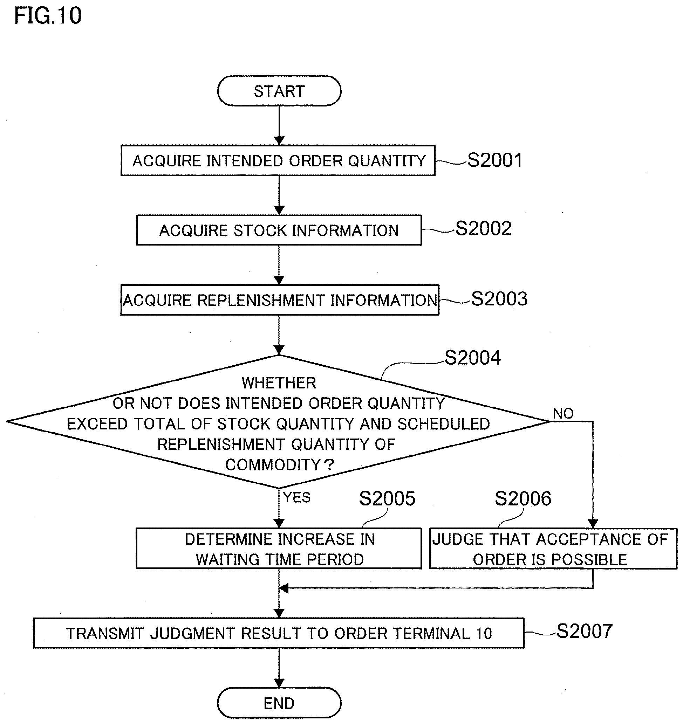

FIG. 10 is a diagram showing an example of a process flow when a commodity selection screen is displayed on the operation/display unit 13 at the time of shifting of the screen.

Shifting of the screen occurs, for example, when the order details confirmation button 133 (see FIG. 4) has been pressed. At this time, whether or not acceptance of the order is possible is judged by the judgment unit 414 (see FIG. 2). Then, in accordance with the result of the judgment, and after the screen has been shifted, a display that announces to the customer whether or not acceptance of the order is possible, or change in the waiting time period, is made. FIG. 10 shows a process that is executed by the management server 40 after the order details confirmation button 133 of the order terminal 10 has been pressed.

First, the reception unit 411 acquires an intended order quantity (step 2001). The reception unit 411 acquires the intended order quantity of a commodity from the order terminal 10 for which the order details confirmation button 133 has been pressed.

Next, the reception unit 411 acquires stock information (step 2002). Then, the reception unit 411 acquires replenishment information (step 2003). Step 2002 and step 2003 are executed in the same manner as in step 1001 and step 1002 shown in FIG. 9.

Next, the judgment unit 414 judges whether or not the intended order quantity exceeds the total of the stock quantity and the scheduled replenishment quantity of the commodity (step 2004). When the customer starts selection of a commodity, the quantity that can be ordered for each commodity is displayed on the operation/display unit 13. The customer orders a commodity within the quantity that can be ordered, but in a time period from when an order is started to when the order details confirmation button 133 is pressed, the stock information or the replenishment information may have changed. The judgment unit 414 judges whether or not the intended order quantity inputted on the order terminal 10 for which the order details confirmation button 133 has been pressed exceeds the total of the stock quantity and the scheduled replenishment quantity.

When the intended order quantity exceeds the total of the stock quantity and the scheduled replenishment quantity of the commodity (YES in step 2004), the judgment unit 414 determines increase in the waiting time period (step 2005).

Then, the transmission unit 412 transmits the judgment result to the order terminal 10 (step 2007). In this case, the transmission unit 412 transmits, to the order terminal 10, increase in the waiting time period as the judgment result. The reception unit 111 of the order terminal 10 receives the judgment result, and the display control unit 113 causes the operation/display unit 13 to display information indicating that the waiting time period will increase. The display control unit 113 may cause an image that urges the customer to reduce the intended order quantity, to be displayed. The customer selects whether to reduce the intended order quantity or wait for completion of replenishment without changing the intended order quantity.

When the intended order quantity exceeds the total of the stock quantity and the scheduled replenishment quantity of the commodity (YES in step 2004), whether or not replenishment is possible may be inquired to the kitchen terminal 30 before the judgment unit 414 makes a judgment. The transmission unit 412 transmits, to the kitchen terminal 30, an inquiry as to whether or not replenishment is possible. Then, based on the result of the inquiry, the judgment unit 414 makes judgment as to increase in the waiting time period.

Meanwhile, when the intended order quantity does not exceed the total of the stock quantity and the scheduled replenishment quantity of the commodity (NO in step 2004), the judgment unit 414 judges that acceptance of the order is possible (step 2006). In this case, in step 2007, the transmission unit 412 transmits, to the order terminal 10, information indicating that acceptance of the order is possible, as the judgment result. The reception unit 111 of the order terminal 10 receives the judgment result, and the display control unit 113 causes the operation/display unit 13 to display an ordinary screen after shifting of the screen.

Hereinafter, modifications of the embodiment will be described. In the modifications, the same configurations as those in the embodiment above will be denoted by the same reference characters, and detailed description thereof is omitted.

### (Modification 1)

In an order system 1-1, after a commodity has been selected, if the intended order quantity exceeds the total of the stock quantity and the scheduled replenishment quantity of the commodity at the time of screen shift (YES in step 2004 in FIG. 10), the order quantity is automatically changed, and this fact is announced.

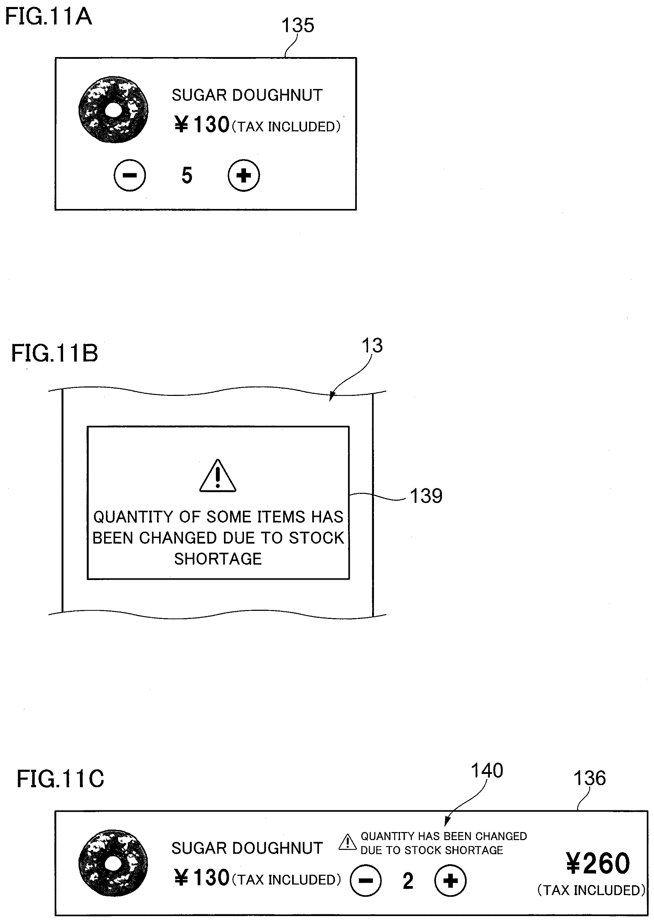

FIGS. 11A to 11C are each a diagram showing an example of an image displayed on the operation/display unit 13 in the order system 1-1. FIG. 11A shows an example of a purchase commodity image 135 displayed in the cart-inside confirmation image 132, FIG. 11B shows an example of an announcement image 139 for the customer, and FIG. 11C shows an example of a corresponding order confirmation image 136 displayed after the announcement has been made to the customer.

Here, a case where the customer has ordered five sugar doughnuts as shown in FIG. 11A will be described. In the example shown in FIG. 10, when the intended order quantity exceeds the total of the stock quantity and the scheduled replenishment quantity of the commodity (YES in step 2004), increase in the waiting time period is transmitted to the order terminal 10 (step 2007), and information indicating that the waiting time period will increase is displayed on the operation/display unit 13.

Meanwhile, when the intended order quantity exceeds the total of the stock quantity and the scheduled replenishment quantity of the commodity, the order quantity is automatically changed. When the order details confirmation button 133 (see FIG. 4) has been pressed, the display control unit 113 (see FIG. 3) causes the operation/display unit 13 to display the announcement image 139 shown, for example, in FIG. 11B. Due to the announcement image 139, the fact that the quantity has been changed due to stock shortage is announced to the customer.

Then, the display control unit 113 causes the operation/display unit 13 to display the order confirmation image 136 in which the order quantity has been changed as shown in FIG. 11C. In the example shown in FIG. 11C, the order quantity of the sugar doughnut which had been five has been changed to two. In addition, the fact that the quantity has been changed due to stock shortage is indicated by text 140.

When the ordered commodity is in a sold-out state and there is no replenishment schedule either, "sold out" may be indicated by text.

Then, when the customer goes back to the commodity selection screen, the fact that an additional order for the commodity that has become out of stock cannot be made is displayed in the cart-inside confirmation image 132 (see FIG. 4). With respect to a commodity that is in a sold-out state and for which there is no replenishment schedule either, the commodity may be deleted from the commodity selection image 131 (see FIG. 4) and the cart-inside confirmation image 132.

Thus, when stock shortage has occurred when the customer has pressed the order details confirmation button 133 (see FIG. 4), the order quantity is automatically changed, and the fact is announced. Accordingly, the work of changing the order details by the customer can be omitted, and the ordering procedure can be simplified.

### (Modification 2)

In an order system 1-2, a method of take-out for the commodity is estimated based on the order details of the customer, and notification of a method of take-out for the commodity is made to the customer in advance.

The controller 41 (see FIG. 2) of the management server 40 has a function of estimating a method of take-out for the commodity, based on the order details of the customer. The controller 41 estimates a method of take-out, for example, based on the quantity of the commodity ordered by the customer. In the memory 42, for example, the quantity of each commodity and a method of take-out are stored in association with each other. The controller 41 acquires the correspondence between the quantity of the commodity and the method of take-out from the memory 42, and estimates a method of take-out, based on the quantity of the commodity ordered by the customer.

The controller 41 may estimate a method of take-out, based on the details of the commodity order by the customer. For example, in the memory 42, a method of take-out is stored in association with each commodity. For example, for a commodity whose shape easily collapses, a box is stored as the method of take-out. The controller 41 acquires the correspondence between the details of the commodity and the method of take-out from the memory 42, and estimates a method of take-out, based on the details of the commodity ordered by the customer.

The controller 41 may estimate a method of take-out, based on the quantity and the details of the commodity ordered by the customer. For example, for a commodity whose shape easily collapses, a box is estimated as the method of take-out, and for the other commodities, a method of take-out is estimated based on the quantity.

When the order details confirmation button 133 (see FIG. 4) has been pressed, the reception unit 411 of the management server 40 acquires the order details from the order terminal 10. The controller 41 estimates a method of take-out, based on the acquired order details. The transmission unit 412 transmits the method of take-out to the order terminal 10. The reception unit 111 of the order terminal 10 receives the method of take-out, and the display control unit 113 causes the operation/display unit 13 to display the method of take-out.

The method of take-out is displayed also on the display 23 of the POS register 20 or the display 33 of the kitchen terminal 30, and the method of take-out is announced to the staff member.

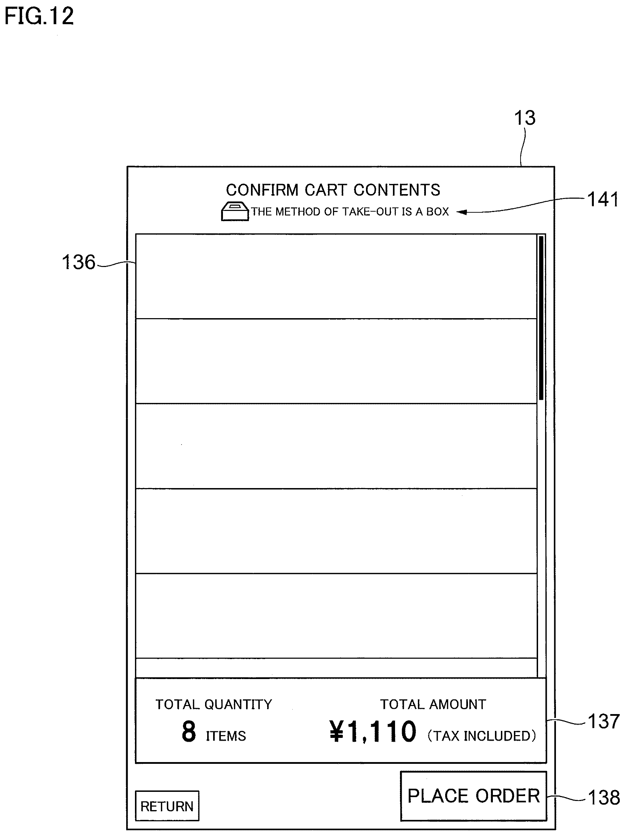

FIG. 12 is a diagram showing an example of an image displayed on the operation/display unit 13 at the time of confirmation of the order details.

Similar to the example shown in FIG. 7, at the time of confirmation of the order details, the order confirmation image 136, the purchase amount image 137, and the purchase details finalization button 138 are displayed on the operation/display unit 13. Further, the method of take-out of the commodity is indicated by text 141. The text 141 indicates a message "the method of take-out is a box" together with an illustration of a box. The text 141 is changed in accordance with the method of take-out, and when the method of take-out is a bag, for example, an illustration of a bag is displayed.

When the package of commodities is divided, the fact is indicated by the text 141. For example, when the method of take-out is one bag and two boxes, a message "the method of take-out is one bag and two boxes." is indicated by the text 141.

Alternatively, after completion of settlement of the order, an image showing the method of take-out may be displayed on the operation/display unit 13.

A configuration in which the customer can designate a method of take-out may be adopted. For example, when the order details confirmation button 133 (see FIG. 4) has been pressed, the display control unit 113 causes the operation/display unit 13 to display a screen for selecting a method of take-out. Then, the selection of a method of take-out by the customer is accepted, and the selected method of take-out is indicated by the text 141.

Thus, a method of take-out is estimated based on the order details, and is announced to the customer and the staff member. Accordingly, the customer can grasp the method of take-out in advance, and the staff member can prepare without hesitation when packaging the commodity.

### (Modification 3)

In an order system 1-3, when the selected commodity is transferred from the commodity selection image 131 (see FIG. 4) to the cart-inside confirmation image 132 (see FIG. 4), an animation in which the commodity moves is displayed. The display of the animation is controlled by the display control unit 113 (see FIG. 3).

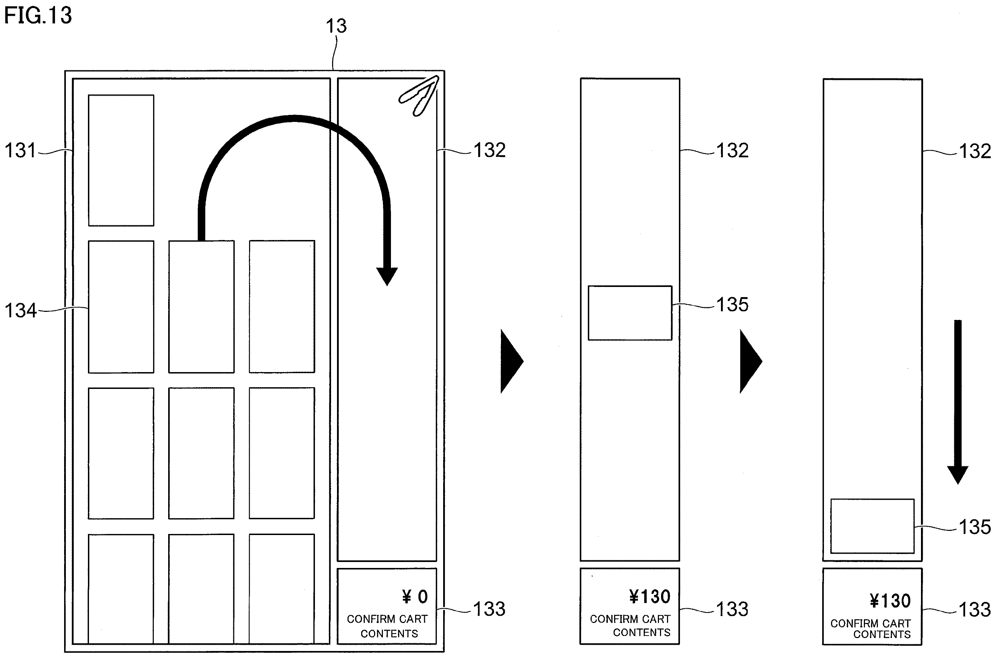

FIG. 13 is a diagram showing an example of movement of an animation displayed on the operation/display unit 13 at the time of commodity selection.

A commodity image of the commodity selection button 134 pressed in the commodity selection image 131 moves upward on the screen. Then, the commodity image is moved to the cart-inside confirmation image 132 and moves as if falling from the top to the bottom on the screen. The movement of the animation matches the motion of the customer actually taking the commodity from a showcase into a tray held by the customer. Through such an animation, the customer can easily and intuitively understand the operation.

An animation in which tongs move together with the movement of the commodity may also be adopted. Accordingly, an animation in which the actual motion of the customer is more accurately reproduced, thereby facilitating understanding of the operation, can be realized.

### (Modification 4)

In an order system 1-4, the customer is authenticated, and purchase of a commodity having restriction of its purchase quantity is restricted.

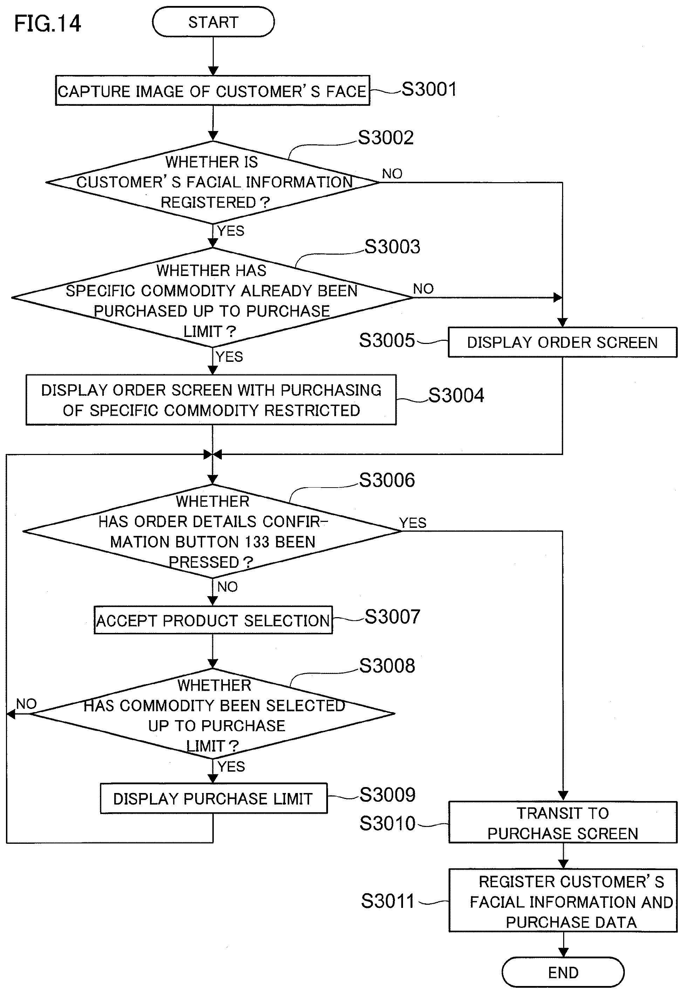

FIG. 14 is a diagram showing an example of a process flow at the time of order acceptance in the order system 1-4. FIG. 14 shows an example in which the customer is authenticated through face authentication and the purchase quantity is restricted. The order terminal 10 includes a camera that takes an image of the face of the customer. In the memory 42 of the management server 40, purchase information of the customer having been registered is stored in association with an image of the face.

Upon start of ordering, the camera of the order terminal 10 takes an image of the face of the customer (step 3001). The taken image is transmitted by the transmission unit 112 to the management server 40. The reception unit 411 of the management server 40 receives the image of the face. The controller 41 judges whether or not there is registration of face information of the customer (step 3002). The controller 41 checks the acquired face image against the face information of customers registered in the memory 42.

When there is no registration of the face information (NO in step 3002), the display control unit 113 (see FIG. 3) of the order terminal 10 causes the operation/display unit 13 to display an order screen (step 3005). The reception unit 111 of the order terminal 10 acquires the judgment result from the management server 40, and the display control unit 113 controls display of the operation/display unit 13. When there is no registration of the face information, the customer has purchased no commodity before. In this case, on the operation/display unit 13, with respect to a specific commodity having restriction of the purchase quantity, the purchase upper limit is displayed.

When there is a registration of the face information (YES in step 3002), the controller 41 judges whether or not the specific commodity has been purchased up to the purchase upper limit (step 3003). The controller 41 confirms purchase history of commodities, with reference to the purchase information of the customer registered in the memory 42.

When the specific commodity has been purchased to the purchase upper limit (YES in step 3003), the display control unit 113 of the order terminal 10 causes the operation/display unit 13 to display an order screen with the purchase of the specific commodity restricted (step 3004). The reception unit 111 of the order terminal 10 acquires the judgment result from the management server 40 and the display control unit 113 controls display of the operation/display unit 13. In this case, on the operation/display unit 13, with respect to the specific commodity that has been purchased up to the purchase upper limit, information indicating that purchase thereof is not allowed is displayed. Alternatively, a configuration in which the specific commodity that has been purchased up to the purchase upper limit is not displayed on the operation/display unit 13, may be adopted.

When the specific commodity has not been purchased up to the purchase upper limit (NO in step 3003), the display control unit 113 of the order terminal 10 causes the operation/display unit 13 to display an order screen (step 3005). The reception unit 111 of the order terminal 10 acquires the judgment result from the management server 40 and the display control unit 113 controls display of the operation/display unit 13.

Next, the controller 11 of the order terminal 10 judges whether or not the order details confirmation button 133 has been pressed (step 3006).

When the order details confirmation button 133 has been pressed (YES in step 3006), the display control unit 113 shifts the display on the operation/display unit 13 to a purchase screen (step 3010).

When the order details confirmation button 133 has not been pressed (NO in step 3006), the controller 11 of the order terminal 10 accepts selection of a commodity (step 3007).

The controller 41 of the management server 40 judges whether or not the commodity has been selected up to the purchase upper limit (step 3008). The controller 41 judges whether or not the commodity has been selected up to the purchase upper limit, based on the past and present purchase quantity and selected quantity of the commodity of the customer. When the commodity has not been selected up to the purchase upper limit (NO in step 3008), the process returns to step 3006.

When the commodity has been selected up to the purchase upper limit (YES in step 3008), the display control unit 113 causes the operation/display unit 13 to display the purchase upper limit (step 3009). Then, selection of the commodity having exceeded the purchase upper limit is restricted for the customer.

After the display on the operation/display unit 13 has shifted to the purchase screen in step 3010, the controller 41 of the management server 40 registers face information and purchase data of the customer into the memory 42 (step 3011). When the face information has already been registered, the controller 41 adds purchase information of this time in the memory 42. When the face information has not been registered, the controller 41 newly registers the face information into the memory 42, and causes the purchase information of this time to be stored in association therewith. Then, the purchase procedure is completed, and the process ends.

Thus, purchase of a commodity is restricted through authentication of the customer. Accordingly, a buyup state of a specific commodity caused by the customer can be inhibited.

Authentication of the customer is not limited to face authentication. For example, the customer who purchases a commodity may be authenticated by causing the customer to be registered as a member, and causing the customer to input a membership number. Alternatively, a configuration in which purchase of a commodity is allowed through authentication of the customer may be adopted. For example, purchase of a member-only commodity can be restricted.

### (Modification 5)

In an order system 1-5, an image of a commodity displayed on the operation/display unit 13 of the order terminal 10 is changed in accordance with the attribute of the customer.

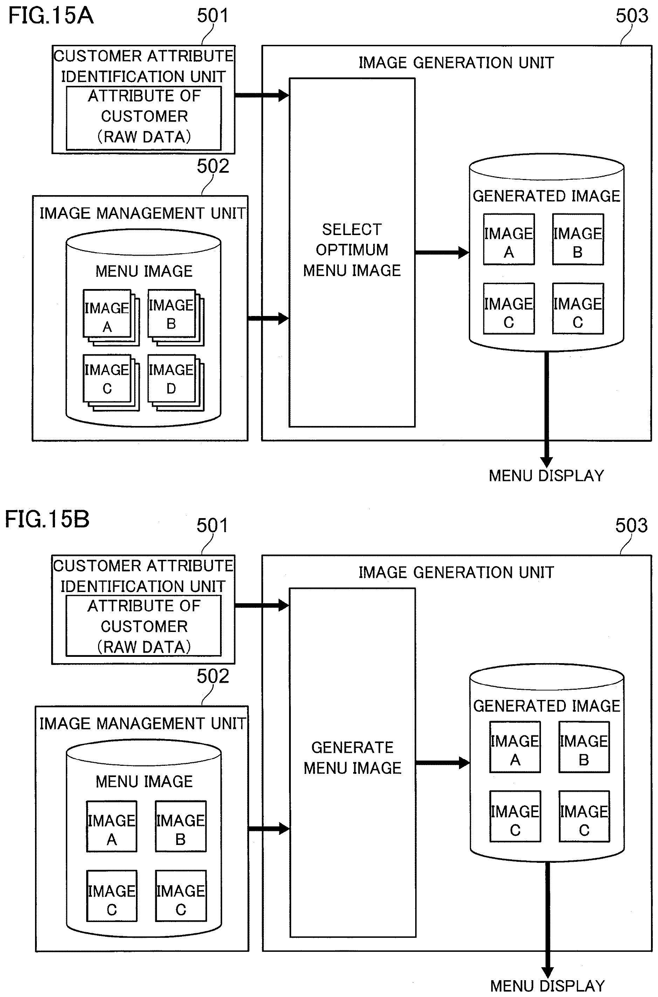

FIGS. 15A and 15B are each a diagram showing an example of a display process of an image of a commodity executed in the order system 1-5. FIG. 15A shows an example in which an optimum image is selected from among images prepared in advance, and FIG. 15B shows an example in which a new image is generated. FIGS. 15A and 15B each show an example in which the process is executed by the order terminal 10.

The order terminal 10 includes a camera that takes an image of the face of the customer. The controller 11 of the order terminal 10 includes a customer attribute identification unit 501, an image management unit 502, and an image generation unit 503. The image taken by the camera is acquired by the customer attribute identification unit 501.

In the example shown in FIG. 15A, the customer attribute identification unit 501 acquires the attribute of the customer from the image taken by the camera. The attribute of the customer is a classification for characterizing the customer such as sex or age. The customer attribute identification unit 501 extracts the attribute of the customer through analysis of the image.

In the image management unit 502, a plurality of types of images are stored in advance for each commodity. The image generation unit 503 selects an image to be displayed on the operation/display unit 13 from the plurality of types of images of the commodity, based on the attribute of the customer. Selection of an image is performed through, for example, machine learning by artificial intelligence (AI). The AI selects and outputs an optimum commodity image in response to an input of the attribute of the customer.

For example, when the attribute of the customer is a female in her twenties, an image with vivid colors is selected. When the attribute of the customer is a male in his twenties, an image that can emphasize a sense of volume is selected.

Then, the display control unit 113 (see FIG. 3) causes the operation/display unit 13 to display the commodity image selected by the image generation unit 503.

The example shown in FIG. 15B is different in that a commodity image is automatically generated in the image management unit 502 in accordance with the attribute of the customer. In the image management unit 502, base images to be used for image generation are stored in advance.

First, the customer attribute identification unit 501 acquires the attribute of the customer from the image taken by the camera. The image generation unit 503 generates a commodity image adjusted for the customer, based on the attribute of the customer and the base images. Generation of the image is performed, for example, by an image generation AI. The image generation AI outputs the commodity image automatically generated in response to an input of the attribute of the customer and the base images.

Then, the display control unit 113 (see FIG. 3) causes the operation/display unit 13 to display the commodity image generated by the image generation unit 503.

In the image generation unit 503, for example, when the attribute of the customer is a female in her twenties, an image with vivid colors is generated. When the attribute of the customer is a male in his twenties, an image that can emphasize a sense of volume is generated.

In a case of a commodity having options such as additional toppings, a commodity image including recommended toppings may be generated in accordance with the attribute of the customer. A commodity image having been processed so as to be visually appealing by varying colors in accordance with the attribute of the customer may be generated.

An onomatopoeic text or illustration adjusted for the attribute of the customer may be added to the commodity image.

As input information to the image generation AI, external factors such as weather information may be used in combination. In the image generation unit 503, a commodity image may be generated in consideration of weather information and the like in accordance with the attribute of the customer.

Thus, the commodity image to be displayed on the operation/display unit 13 is changed in accordance with the attribute of the customer. Accordingly, a commodity image that suits the preference of the customer is displayed, whereby the purchase intention can be enhanced.

Although the embodiment and modifications of the present invention have been described, the above-described embodiment and modifications are merely examples, and the present invention is not limited thereto. For example, the order terminal 10 may be a mobile terminal such as a smartphone on which mobile ordering can be performed, and the POS register 20 may have a function as the order terminal 10.

The order terminal 10 may have the function of the management server 40. The controller 11 of the order terminal 10 may realize the function executed by the management server 40. For example, when the order terminal 10 has accepted an order for a commodity in a sold-out state, a replenishment instruction for the commodity is transmitted from the order terminal 10 to the kitchen terminal 30. When the order terminal 10 has accepted an order for a commodity for which the stock quantity is less than the intended order quantity, a replenishment instruction for the commodity is transmitted from the order terminal 10 to the kitchen terminal 30. Then, the replenishment information is displayed on the operation/display unit 13 of the order terminal 10.

When the replenishment information has been changed, the change may be announced to the customer. For example, to the customer who has completed ordering for a commodity and is waiting for reception thereof, a receipt on which a two-dimensional code such as a QR code (registered trademark) is printed is issued at the time of completion of the order. The customer can confirm the change in the replenishment information by reading the two-dimensional code with a terminal.

Switching, performed by the switching unit 116 of the order terminal 10, of whether or not to provide announcement may be controllable by the kitchen terminal 30. The kitchen terminal 30 accepts switching of whether or not to provide announcement, selection of information to be announced, determination of an announcement mode, and the like, from the operation unit 34.

## Claims

1. An order system comprising:
a display configured to display a commodity to be sold;
an operation unit that accepts an input operation by a user regarding a commodity order;
an acquisition unit configured to acquire a stock quantity of the commodity; and
an acceptance unit configured to allow, after announcing replenishment information regarding replenishment of the commodity to the user, acceptance of an order for the commodity in a sold-out state or the commodity for which the stock quantity acquired by the acquisition unit is less than an intended order quantity thereof.

2. The order system according to claim 1, wherein
the replenishment information includes at least one of whether to perform replenishment of the commodity, a time period required for replenishment of the commodity, a scheduled replenishment quantity of the commodity, or information indicating that a waiting time period will occur before reception of the commodity.

3. The order system according to claim 1or 2, wherein
the replenishment information includes a scheduled replenishment quantity of the commodity, and
the acceptance unit announces, to the user, a number obtained by subtracting the intended order quantity of the commodity from a total of the stock quantity of the commodity and the scheduled replenishment quantity of the commodity.

4. The order system according to any one of claims 1 to 3, wherein
the replenishment information includes a scheduled replenishment quantity of the commodity, and
responding to the intended order quantity of the commodity exceeds a total of the stock quantity of the commodity and the scheduled replenishment quantity of the commodity, the acceptance unit announces, to the user, that a time period required for replenishment of the commodity will increase.

5. The order system according to any one of claims 1 to 4, comprising
a switching unit configured to switch whether or not to announce the replenishment information to the user.

6. The order system according to any one of claims 1 to 5, comprising
a kitchen terminal to which a staff member of a kitchen inputs the replenishment information, wherein
the acquisition unit acquires the replenishment information inputted to the kitchen terminal.

7. The order system according to claim 6, wherein
the kitchen terminal accepts a change instruction for changing the replenishment information, and
the acquisition unit acquires the change instruction from the kitchen terminal.

8. The order system according to claim 1 any one of claims 1 to 7, wherein
the replenishment information includes a scheduled replenishment quantity of the commodity,
the order system comprises
a kitchen terminal operated by a staff member of a kitchen, and
an inquiry unit configured to make an inquiry to the kitchen terminal as to whether or not replenishment of the commodity is possible, based on the intended order quantity of the commodity exceeding a total of the stock quantity of the commodity and the scheduled replenishment quantity of the commodity, and
the acceptance unit accepts an order for the commodity, based on a result of the inquiry made by the inquiry unit.

9. The order system according to any one of claims 1 to 8, comprising
a kitchen terminal operated by a staff member of a kitchen, wherein
based on acceptance of an order for the commodity in a sold-out state or the commodity for which the stock quantity is less than the intended order quantity, the acceptance unit transmits, to the kitchen terminal, a replenishment instruction for the commodity for which the order has been accepted.

10. An order terminal comprising:
a display configured to display a commodity to be sold;
an operation unit that accepts an input operation by a user regarding a commodity order;
an acquisition unit configured to acquire a stock quantity of the commodity; and
an acceptance unit configured to allow, after announcing replenishment information regarding replenishment of the commodity to the customer, acceptance of an order for the commodity in a sold-out state or the commodity for which the stock quantity having been acquired is less than an intended order quantity thereof.

11. An order method comprising:
acquiring order information of a commodity through an input operation of a user;
acquiring a stock quantity of the commodity to be sold; and
accepting, after announcing replenishment information regarding replenishment of the commodity to the user, an order for the commodity in a sold-out state or the commodity for which the stock quantity having been acquired is less than an intended order quantity thereof.

12. The order method according to claim 11, wherein
the replenishment information includes at least one of whether to perform replenishment of the commodity, a time period required for replenishment of the commodity, a scheduled replenishment quantity of the commodity, or information indicating that a waiting time period will occur before reception of the commodity.

13. The order method according to claim 11 or 12, wherein
the replenishment information includes a scheduled replenishment quantity of the commodity, and
announcing, to the user, a number obtained by subtracting the intended order quantity of the commodity from a total of the stock quantity of the commodity and the scheduled replenishment quantity of the commodity.

14. The order method according to any one of claims 11 to 13, wherein
the replenishment information includes a scheduled replenishment quantity of the commodity, and
responding to the intended order quantity of the commodity exceeds a total of the stock quantity of the commodity and the scheduled replenishment quantity of the commodity, announcing, to the user, that a time period required for replenishment of the commodity will increase.

15. The order method according to any one of claims 11 to 14, comprising switching whether or not to announce the replenishment information to the user.
